# FASCICULE DE BREVET EUROPEEN

(11) **EP 1 222 008 B1**
(45) Date de publication et mention de la délivrance du brevet: **28.05.2003**
(21) Numéro de dépôt: 00967975.4
(22) Date de dépôt: 06.10.2000
(51) Int. Cl.: B01D 11/02

(54) **PROCEDE D'EXTRACTION PAR FLUIDE SUPERCRITIQUE**
VERFAHREN ZUR EXTRAKTION MIT EINEM ÜBERKRITISCHEN FLUID
METHOD FOR SUPERCRITICAL FLUID EXTRACTION

(30) Priorité: 19.10.1999 FR 9913241
(43) Date de publication de la demande: 17.07.2002
(73) Titulaire: Hitex, 56038 Vannes Cedex (FR)
(72) Inventeur: MENGAL, Philippe, B- 1428 Lillois (BE)
(74) Mandataire: Vidon, Patrice
(86) Numéro de dépôt international: FR0002790
(87) Numéro de publication internationale: WO01028649

(56) Documents cités:
- EP-A- 0 250 953
- GB-A- 2 091 292
- US-A- 4 964 995
- US-A- 5 965 025

## Description

L'invention concerne le domaine des procédés d'extraction de composés actifs à partir de matières premières d'origine naturelle, permettant d'obtenir des extraits actifs entrant dans la formulation de compositions cosmétiques, pharmaceutiques ou alimentaires.

Les extraits naturels, obtenus notamment à partir de végétaux, d'algues, de biomasses ou de produits de la ruche, sont utilisés traditionnellement depuis longtemps dans le domaine cosmétique, dermo-pharmaceutique, pharmaceutique ou alimentaire.

De nombreuses méthodes d'extraction sont traditionnellement mises en oeuvre pour obtenir ces extraits : hydro-distillation, extraction par solvants organiques, macération hydroglycolique, lixiviation, décoction, ...

Ces procédés traditionnels comportent des avantages, principalement liés à la simplicité des technologies mises en oeuvre, mais également des inconvénients. A ce sujet, on peut citer les problèmes suivants :
- présence de solvants résiduels dans le cas d'extraction par solvant organique ;
- mauvaise stabilité des extraits obtenus par macération ;
- temps de contact très long pour les macérations hydroglycoliques ;
- faible sélectivité de l'extraction en général, entraînant une trop forte coloration des extraits.

Au-delà de l'image « produit naturel », l'industrie cosmétique et dermopharmaceutique recherche aujourd'hui des produits très stables, des extraits sélectifs riches en substances actives. De plus, le coût des extraits doit être optimisé au mieux.

On sait par ailleurs qu'un fluide en état supercritique, c'est-à-dire dans un état caractérisé soit par une pression et une température respectivement supérieures à la pression et à la température critiques dans le cas d'un corps pur, soit par un point représentatif (pression, température) situé au-delà de l'enveloppe des points critiques représentés sur un diagramme (pression, température) dans le cas d'un mélange, présente, pour de très nombreuses substances, un pouvoir solvant élevé sans commune mesure avec celui observé dans ce même fluide à l'état de gaz comprimé.

C'est la raison pour laquelle ces fluides sont utilisés dans de nombreux procédés d'extraction (solide/fluide), de fractionnement (liquide/fluide), de chromatographie analytique ou préparative, de traitement des matériaux (céramiques, polymères, ...).

À ce sujet, il est à noter que les propriétés physico-chimiques du dioxyde de carbone (CO₂) ainsi que ses coordonnées critiques (pression critique : 7,4 Mpa et température critique : 31° C) en font le solvant préféré dans de nombreuses applications, surtout qu'il ne présente pas de toxicité et est disponible à un haut niveau de pureté en très grande quantité et à bas prix.

Cette technologie permet d'obtenir des extraits de très haute qualité, sur mesure, en fonction du choix des paramètres opératoires. En effet le pouvoir solvant du CO₂ supercritique varie en fonction de la pression et de la température d'extraction. Des huiles riches en acides gras polyinsaturés ou des fractions riches en insaponifiable de très grande qualité sont ainsi obtenues par cette technologie.

L'inconvénient de l'extraction au CO₂ supercritique est le coût élevé lié au faible pouvoir solvant du CO₂ pur, ce qui limite son application à quelques niches. Afin d'accroître le pouvoir solvant du CO₂ supercritique et donc d'augmenter la productivité du procédé, on peut ajouter au CO₂ supercritique un co-solvant tel que de l'éthanol, du méthanol ou de l'acétone. Le pouvoir solvant du CO₂ supercritique peut alors être augmenté d'un facteur 10. Malheureusement, le gain de productivité est compensé par la nécessité d'éliminer le solvant de l'extrait, ce qui d'une part implique une opération supplémentaire de distillation/séchage, et d'autre part engendre souvent des problèmes de stabilité.

Le principal objectif de la présente invention est de proposer un nouveau procédé d'extraction par CO₂ supercritique *ne* présentant pas l'inconvénient susmentionné.

L'objectif de la présente invention est également de proposer un tel procédé plus simple que les procédés d'extraction par fluide supercritique de l'état de la technique.

Ces objectifs sont atteints grâce à l'invention qui concerne un procédé de fabrication d'une composition cosmétique, pharmaceutique ou alimentaire comprenant un excipient et un ou plusieurs composés actifs, le ou lesdits composés actifs étant extraits à partir d'une matière première par extraction par fluide supercritique comprenant les étapes consistant à :
- mettre en contact ladite matière première contenant les composés actifs en présence d'au moins un fluide d'extraction à l'état supercritique comprenant du CO₂ et au moins un co-solvant,
- séparer ledit fluide d'extraction contenant au moins une partie du ou des composés actifs ;
- provoquer la vaporisation du CO₂ contenu dans le fluide d'extraction pour obtenir un extrait constitué dudit co-solvant et de ladite partie du ou des composés actifs ;
- récupérer ledit extrait constitué par le mélange co-solvant/composé(s) actif(s);
caractérisé en ce que,
ledit excipient de ladite composition est constitué par ledit co-solvant.

La présente invention est donc basée sur la découverte que certains excipients compatibles avec un usage en cosmétique, dermo-pharmaceutique, pharmaceutique ou alimentaire peuvent êtres utilisés en mélange avec le CO₂ supercritique. Ce mélange se comporte alors comme une fluide dont on peut ajuster le pouvoir solvant en modifiant la proportion CO₂/excipient ou en adaptant la pression et la température d'extraction.

L'invention utilise donc les propriétés des fluides supercritiques ou des liquides sous pression, auxquels un excipient a été ajouté, et présentant, dans des conditions de température et de pression appropriées, un pouvoir de dissolution accru vis-à-vis des actifs à extraire, une meilleure sélectivité tout en limitant considérablement les risques de dégradation des composés actifs, ceux-ci étant protégés au cours du procédé d'extraction.

Le mélange excipient-actif peut de plus correspondre à la formulation finale, ce qui constitue un avantage important.

Selon un aspect préférentiel de l'invention, le procédé selon celle-ci comprend une étape supplémentaire consistant à recycler le CO₂ vaporisé, en tête de procédé où il peut être condensé, pompé et réchauffé pour être de nouveau passé à l'état supercritique.

Selon une variante, le procédé comprend une étape préliminaire consistant à ajouter ledit excipient au CO₂ à l'état supercritique pour obtenir ledit fluide d'extraction.

Selon une autre variante, le procédé comprend une étape préliminaire consistant à ajouter ledit excipient au CO₂ liquide sous pression puis à réchauffer le mélange obtenu pour faire passer le CO₂ à l'état supercritique et obtenir ledit fluide d'extraction.

Selon un autre aspect préférentiel de l'invention, ledit fluide d'extraction présente une température comprise entre environ 31° C et 100°C environ et une pression comprise entre environ 7,4 MPa et environ 50 MPa.

Les excipients qui peuvent être utilisés dans le cadre de la présente invention peuvent être tout composé ou mélange de composés compatibles avec un usage cosmétique, dermo-pharmaceutique, pharmaceutique ou alimentaire présentant une solubilité suffisante dans le CO₂ sous pression. Ainsi le glycérol, un excipient classiquement utilisé en cosmétique, qui est rigoureusement insoluble dans le CO₂, ne peut être choisi alors que d'autres composés présentant une solubilité faible mais non nulle, peuvent être valablement utilisés.

Préférentiellement, selon que la formulation est destinée à un produit cosmétique, pharmaceutique, dermo-pharmaceutique ou alimentaire, ledit excipient est choisi dans le groupe constitué par, le propylène glycol, le butylène glycol, les polyéthylène glycols de tous poids moléculaires, le monoéthylether du diéthylène glycol, l'hexylène glycol, les polyols, les corps gras glycéridiques, les corps gras non glycéridiques, les esters, les cires, les huiles silicones et les composés terpéniques.

Avantageusement, le procédé selon l'invention est mis en oeuvre avec des proportions pondérales (matière première)/(CO₂)/(Excipient) de (10)/(10 à 2000)/(1 à 200).

Les extraits obtenus par le procédé objet de la présente invention peuvent être utilisés dans toute forme galénique employée en cosmétique ou dermopharmaceutique : émulsion huile dans eau et eau dans huile, shampooings et après-shampooings, laits, lotions, gels, pommades, laques pour cheveux, sans que cette liste soit exhaustive. Ils peuvent également être utilisés dans le domaine alimentaire et pharmaceutique.

Il est possible d'incorporer les extraits obtenus par le procédé objet de la présente invention dans des vecteurs cosmétiques tels que les liposomes, les chylomicrons, les macro, micro et nanoparticules, ainsi que les macro, micro, nanocapsules. On peut les absorber sur des polymères organiques poudreux, des talcs, bentonites et autres supports minéraux.

Les extraits obtenus par le procédé objet de la présente invention peuvent être combinés dans des compositions cosmétiques avec tout autre ingrédient habituellement utilisé en cosmétique et dermopharmaceutique: lipides, polymères gélifiants et viscosants, tensioactifs et émulsifiants, principes actif hydro ou liposolubles, extraits d'autres matières premières.

Les compositions cosmétiques ou dermopharmaceutiques contenant les extraits obtenus par le procédé objet de la présente invention, sont destinées à toute les applications cométiques et dermopharmaceutiques, à savoir notamment : soin et hygiène de la peau, du cuir chevelu, des cheveux, des muqueuses, des régions bucco-dentaires, pour les traitements anti-vieillissement et la protection solaire, pour l'hydratation, l'effet lissage ou toute autre applications.

L'invention, ainsi que les avantages qu'elle présente seront plus facilement compris grâce aux exemples de réalisation de celle-ci exposée ci-après.

### EXEMPLE 1

Le présent exemple constitue un exemple comparatif entre l'extraction traditionnelle au CO₂ supercritique et l'extraction, selon une variante du procédé objet de la présente invention, d'extrait de gingembre.

Selon le procédé classique, l'extraction au CO₂ supercritique est effectuée sans co-solvant à 300 bar et 50°C. 9 g d'extrait sont collectés en faisant percoler 6 kg de CO₂ sur 30 g de gingembre préalablement broyés et 11 g d'extrait sont collectés en faisant percoler 12 kg de CO₂. Dans ces conditions, l'extrait obtenu pâteux et " collant" présente une odeur et une flaveur puissante, caractéristique de la matière première, tandis que le résidu est presque désodorisé.

Selon l'invention, le procédé est ensuite mis en oeuvre dans les mêmes conditions de pression et de température mais en présence d'un co-solvant, à savoir du propylène glycol, en mélange avec le CO₂ à raison de 10 g pour 1 kg de CO₂.

L'utilisation d'un co-solvant permet d'accroître la performance du procédé d'extraction.

Plus précisément, grâce à l'invention, 5 kg de mélange CO₂ propylène glycol sont suffisants pour obtenir un produit constitué d'extrait de gingembre et de propylène glycol présentant un pouvoir aromatique (par exemple selon l'indice Scoville tel que défini dans l'ouvrage "Epices et aromates" -éditions Lavoisier - 1992) équivalent à celui de l'extrait obtenu sans co-solvant en utilisant 12 kg de CO₂. De plus, le produit obtenu grâce à l'invention, contient comme excipient le co-solvant et présente de ce fait un aspect fluide, ce qui le rend beaucoup plus aisé à manipuler et à formuler dans une préparation alimentaire.

### EXEMPLE 2

Dans cet exemple, l'extraction traditionnelle au CO₂ supercritique du poivre blanc est comparée à l'extraction selon une variante du procédé objet de la présente invention.

En extraction au CO₂ supercritique sans co-solvant à 300 bar et 40°C, 10 g d'extrait sont collectés en faisant percoler 20 kg de CO₂ sur 500 g de poivre blanc concassé. Dans ces conditions, l'extrait obtenu d'aspect résineux présente une flaveur puissante et piquante, caractéristique de la matière première.

Dans les mêmes conditions de pression et de température, l'ajout de propylène glycol à raison de 10 g pour 1 kg de CO₂ permet d'accroître la performance du procédé. Dans ces conditions, 10 kg de mélange CO₂ propylène glycol sont suffisants pour obtenir le même pouvoir d'aromatisation, tandis que l'extrait obtenu, d'aspect fluide, est aisé à manipuler et à formuler dans une préparation alimentaire.

### EXEMPLE 3

Cet exemple est une variante de l'exemple 2 pour laquelle le propylène glycol est remplacé par de l'huile d'arachide ajoutée à 5 g par kg de CO₂. L'extrait obtenu, d'aspect huileux est particulièrement adapté à la formulation de préparation alimentaire en présence d'autres corps gras.

### EXEMPLE 4

Dans cet exemple, l'extraction traditionnelle au CO₂ supercritique de poudre de paprika est comparée à l'extraction selon une variante du procédé objet de la présente invention .

En extraction au CO₂ supercritique sans co-solvant à 300 bar et 60°C, le rendement en extrait est très faible, même pour des quantités importantes et CO₂ percolé.

En ajoutant au CO₂, 5% d'alcool éthylique pour en accroître le pouvoir solvant, 30 kg de mélange CO₂ + alcool sont nécessaires pour obtenir un "rendement couleur" de 50 g d'oléorésine à 110 000 UC (UC : Unités Couleur selon la norme American Spice Trade Association Analytical Methods (1986) /ASTAA New-york Method N°20.0 ), pour 1 kg de paprika après avoir évaporé l'alcool.

En mettant en oeuvre le procédé objet de la présente invention en ajoutant 5 g de propylène glycol par kg de CO₂, le même rendement couleur est atteint pour 25 kg de mélange CO₂ propylène glycol pour 1 kg de paprika. L'extrait collecté par décantation, incluant le co-solvant, présente un rendement couleur de plus de 200 000 UC et ce, sans qu'il soit nécessaire de procéder à l'évaporation de co-solvant.

### EXEMPLE 5

Dans cet exemple, l'extraction traditionnelle au CO₂ supercritique de parthénolide de *Tanacetum parthenium* est comparée à l'extraction selon une variante du procédé objet de la présente invention.

En extraction au CO₂ supercritique sans co-solvant à 300 bar et 40°C, 14,8 g d'extrait vert foncé et d'aspect résineux sont collectés en faisant percoler 8 kg de CO₂ sur 300 g de drogue broyée. L'extrait analysé en Chromatographie en Phase Gazeuse titre 14,5 % en parthénolide. Le rendement en parthénolide est donc de 14,8 x 0,145/300 = 0,715%. Le lot de plante utilisé titrant 0,8% en parthénolide, on peut considérer que 90% a été extrait. Afin d'accroître sa conservation et de permettre la formulation de cet extrait en capsule molle, l'extrait brut doit être dilué avec une huile glycéridique.

Dans les mêmes conditions de pression et de température, l'extraction a été réalisée en ajoutant au CO₂ 0,5% d'un mélange de triglycérides d'acides caprique et caprylique. En percolant successivement 6 kg de ce mélange sur 300 g de drogue puis 1 kg de CO₂ pur, 40,5 g d'extrait huileux faiblement coloré sont collectés. Cet extrait titrant 5,5 % (m/m) en parthénolide, il peut être formulé en l'état et conditionné en capsule molle.

### EXEMPLE 6

Dans cet exemple, l'extraction traditionnelle au CO₂ supercritique de kawa lactones de kawa-kawa (*Piper methysticum*) est comparée à l'extraction selon une variante du procédé objet de la présente invention.

En extraction au CO₂ supercritique sans co-solvant à 300 bar et 40°C, 21,5 g d'extrait jaune orangé visqueux sont collectés en faisant percoler 10 kg de CO2 sur 350 g de plante broyée. L'extrait analysé par HPLC titre 85% en kawa lactones total. Cet extrait doit ensuite être standardisé à 30% de kawa lactones en le mélangeant avec un excipient.

En réalisant l'extraction selon le procédé objet de la présente invention en ajoutant au CO2 2% (m/m) de triglycérides d'acide caprique et caprylique, l'extrait collecté jaune vif d'aspect huileux est standardisé à 30% de kawa lactones en limitant la perte de principe actif par dégradation.

### EXEMPLE 7

Dans cet exemple, l'extraction traditionnelle au CO₂ supercritique de fleurs de Calendula est comparée à l'extraction selon une variante du procédé objet de la présente invention.

Par extraction au CO2 supercritique auquel sont ajoutés 3% d'un mélange de triglycérides d'acides caprique et caprylique, on observe une cinétique d'extraction de la lutéine utilisée comme traceur deux fois plus rapide que par extraction au CO₂ sans excipient. De plus, l'extrait obtenu par le procédé objet de la présente invention est beaucoup plus facile à employer dans des préparations dermo-pharmaceutiques et cosmétiques.

### EXEMPLE 8

Cet exemple est une variante de l'exemple 7 pour lequel une partie de l'eau contenue dans les fleurs de Calendula est co-extraite. L'extrait offre alors l'aspect d'une émulsion dont les propriétés présentent un intérêt dans les préparations dermo-pharmaceutiques et cosmétiques.

Les modes de réalisation de l'invention ici décrits n'ont nullement pour objet de réduire la portée de l'invention. Il pourra donc y être apporté de nombreuses modifications sans sortir du cadre de celles-ci.

## Revendications

1. Procédé de fabrication d'une composition cosmétique, pharmaceutique ou alimentaire comprenant un excipient et un ou plusieurs composés actifs, le ou lesdits composés actifs étant extraits à partir d'une matière première par extraction par fluide supercritique comprenant les étapes consistant à :
- mettre en contact ladite matière première contenant les composés actifs en présence d'au moins un fluide d'extraction à l'état supercritique comprenant du CO₂ et au moins un co-solvant,
- séparer ledit fluide d'extraction contenant au moins une partie du ou des composés actifs ;
- provoquer la vaporisation du CO₂ contenu dans le fluide d'extraction pour obtenir un extrait constitué dudit co-solvant et de ladite partie du ou des composés actifs ;
- récupérer ledit extrait constitué par le mélange co-solvant/composé(s) actif(s) ;
**caractérisé en ce que**,
ledit excipient de ladite composition est constitué par ledit co-solvant.

2. Procédé selon la revendication 1 **caractérisé en ce qu'**il comprend une étape consistant à recycler le CO₂ vaporisé.

3. Procédé selon l'une quelconque des revendications 1 ou 2 **caractérisé en ce qu'**il comprend une étape préliminaire consistant à ajouter ledit excipient au CO₂ à l'état supercritique pour obtenir ledit fluide d'extraction.

4. Procédé selon l'une quelconque des revendications 1 ou 2 **caractérisé en ce qu'**il comprend une étape préliminaire consistant à ajouter ledit excipient au CO₂ liquide sous pression puis à réchauffer le mélange obtenu pour faire passer le CO₂ à l'état supercritique et obtenir ledit fluide d'extraction.

5. Procédé selon l'une quelconque des revendications 1 à 4 **caractérisé en ce que** ledit fluide d'extraction présente une température comprise entre environ 31°C et 100°C environ et une pression comprise entre environ 7,4 MPa et environ 50 MPa.

6. Procédé selon l'une quelconque des revendications 1 à 5 **caractérisé en ce que** ledit excipient est choisi dans le groupe constitué par ledit excipient est choisi dans le groupe constitué par, le propylène glycol, le butylène glycol, les polyéthylène glycols de tous poids moléculaires, le monoéthylether du diéthylène glycol, l'hexylène glycol, les polyols, les corps gras glycéridiques, les corps gras non glycéridiques, les esters, les cires, les huiles silicones et les composés terpéniques.

7. Procédé selon l'une quelconque des revendications 1 à 6 **caractérisé en ce qu'**il est mis en oeuvre avec des proportions pondérales (matière première)/(CO₂)/(excipient) de (10)/(10 à 2000)/(1 à 200).

## Patentansprüche

1. Verfahren zum Herstellen eines Produktes aus dem Bereich der Kosmetik, der Pharmazie oder der Lebensmittel, das eine Grundmasse und eine aktive Zusammensetzung oder mehrere aktive Zusammensetzungen umfasst, wobei die aktive(n) Zusammensetzung(en) aus einem Rohstoff durch Extraktion mit Hilfe einer superkritischen Flüssigkeit extrahiert wird (werden) und wobei diese Extraktion die folgenden Schritte umfasst:
- Bringen des Rohstoffes, das die aktive(n) Zusammensetzung(en) enthält, in Berührung mit mindestens einer Extraktionsflüssigkeit im superkritischen Zustand, die CO₂ und mindestens ein Ko-Lösungsmittel enthält,
- Abtrennen dieser Extraktionsflüssigkeit, die mindestens einen Teil der aktiven Zusammensetzung(en) enthält,
- das Verdampfen des in der Extraktionsflüssigkeit enthaltenen CO₂ hervorrufen, um ein Extrakt zu gewinnen, das aus dem Ko-Lösungsmittel und dem erwähnten Teil der aktiven Zusammensetzung(en) besteht,
- Auffangen des aus dem Gemisch Ko-Lösungsmittel/aktive Zusammensetzung(en) gebildeten Extraktes,
**dadurch gekennzeichnet, dass** das Ko-Lösungsmittel die Grundmasse des Produktes bildet.

2. Verfahren nach Anspruch 1, **dadurch gekennzeichnet, dass** es einen Schritt umfasst, bei dem das verdampfte CO₂ rezykliert wird.

3. Verfahren nach einem der Ansprüche 1 oder 2, **dadurch gekennzeichnet, dass** es einen vorausgehenden Schritt umfasst, bei dem die Grundmasse dem CO₂ im superkritischen Zustand zugegeben wird, um die Extraktionsflüssigkeit zu erhalten.

4. Verfahren nach einem der Ansprüche 1 oder 2, **dadurch gekennzeichnet, dass** es einen vorausgehenden Schritt umfasst, bei dem die Grundmasse dem flüssigen und unter Druck stehenden CO₂ zugegeben wird, wonach das hergestellte Gemisch aufgeheizt wird, um das CO₂ in den superkritischen Zustand zu versetzen und die Extraktionsflüssigkeit zu gewinnen.

5. Verfahren nach einem der Ansprüche 1 bis 4, **dadurch gekennzeichnet, dass** die Temperatur der Extraktionsflüssigkeit zwischen etwa 31 °C und ca. 100°C und deren Druck zwischen etwa 7,4 MPa und ca. 50 MPa liegt.

6. Verfahren nach einem der Ansprüche 1 bis 5, **dadurch gekennzeichnet, dass** die Grundmasse aus der Gruppe gewählt wird, die das Propylenglykol, das Butylenglykol, die Polyethylenglykole aller Molekulargewichte, den Monoethylether des Dietyhlenglykols, das Hexylenglykol, die Polyole, die glyzeridischen Fette, die nicht glyzeridischen Fette, Estern, Wachse, Silikonöle und Terpentinzusammensetzungen enthält.

7. Verfahren nach einem der Ansprüche 1 bis 6, **dadurch gekennzeichnet, dass** es mit Gewichtsanteilen (Rohstoff)/(CO₂)/(Grundmasse) von (10)/(10 bis 2000)/(1 bis 2000) angewandt wird.

## Claims

1. Method for producing a cosmetic, pharmaceutical or food composition comprising an excipient and one or more active compounds, the said active compound or compounds being extracted from a raw material by extraction with a supercritical fluid comprising the following steps consisting of :
- putting the said raw material containing active compounds into the presence of at least one extraction fluid in the supercritical state comprising CO₂ and at least one co-solvent;
- separating the said extraction fluid containing at least part of the active compound or compounds;
- causing the CO₂ contained in the extraction fluid to vaporise so as to obtain an extract consisting of the said co-solvent and the said part of the active compound or compounds;
- recovering the said extract consisting of the co-solvent/active compound(s) mixture;
**characterised in that**
the said excipient of the said composition consists of the said co-solvent.

2. Method according to claim 1, **characterised in that** it includes a step consisting of recycling the vaporised CO₂.

3. Method according to either of claims 1 or 2,
**characterised in that** it includes a preliminary step consisting of adding the said excipient to CO₂ in the supercritical state so as to obtain the said extraction fluid.

4. Method according to either of claims 1 or 2,
**characterised in that** it includes a preliminary step consisting of adding the said excipient to liquid CO₂ under pressure and then reheating the mixture obtained so as to cause the CO₂ to pass to the supercritical state and to obtain the said extraction fluid.

5. Method according to any one of claims 1 to 4,
**characterised in that** the said extraction fluid has a temperature of between approximately 31°C and approximately 100°C at a pressure of between approximately 7.4 MPa and approximately 50 MPa.

6. Method according to any one of claims 1 to 5,
**characterised in that** the said excipient is chosen from the group consisting of propylene glycol, butylene glycol, polyethylene glycols of all molecular weights, diethylene glycol monoethylether, hexylene glycol, polyols, glyceridic fatty bodies, non-glyceridic fatty bodies, esters, waxes, silicone oils and terpenic compounds.

7. Method according to any one of claims 1 to 6,
**characterised in that** it is put into practice with weight proportions (raw material)/ (CO₂)/(excipient) of (10)/(10 to 2000)/(1 to 200).
